# EUROPEAN PATENT APPLICATION

(11) **EP 4 571 111 A1**
(43) Date of publication of application: **18.06.2025**
(21) Application number: 23307224.8
(22) Date of filing: 15.12.2023
(51) Int. Cl.: F04B 39/00, F04C 29/06, B29B 17/04, B29C 44/34, B29C 44/44

(54) **AN ACOUSTIC HOOD FOR A COMPRESSOR AND A METHOD OF PREPARING A FOAM MATERIAL FOR FORMING SAID ACOUSTIC HOOD**

(71) Applicant: Danfoss Commercial Compressors, 01600 Trévoux (FR); Bramming Plast-Industri A/S, 6740 Bramming (DK)
(72) Inventor: Christensen, Benny, 6740 Bramming (DK); Schmidt Kristensen, Jimmi, 6740 Bramming (DK); Dziallas Brodersen, Christina, 6760 Ribe (DK); Kamp Jensen, Kasper, 6740 Bramming (DK); DAUSSIN, Arnaud, 6430 Nordborg (DK); GENEVOIS, David, 6430 Nordborg (DK); LAISSUS, Jean-Jacques, 6430 Nordborg (DK); BONNEFOI, Patrice, 6430 Nordborg (DK); BOU DARGHAM, Rémi, 6430 Nordborg (DK); ROSSON, Yves, 6430 Nordborg (DK)
(74) Representative: Germain Maureau

(57) **Abstract**

An acoustic hood (2) comprises a first semi-shell (3), a second semi-shell (4) and a bottom part (5) forming an enclosure configured to surround a compressor; an inlet piping opening (7); and an outlet piping opening (8). Each of the first and second semi-shells (3, 4) is formed from a multi-layer foam material comprising a first inner layer (9a, 9b) which is a sound absorbing and insulating layer and a second outer layer (11a, 11b) which is a sound absorbing and insulating layer. The first semi-shell (3) is connected with the second semi-shell (4) through at least one stepped lap joint formed by the first inner layers (9a, 9b) and the second outer layers (11a, 11b) of the first and second semi-shells (3, 4).

## Description

### Field of the invention

The invention relates to an acoustic hood for a compressor, and for example for a scroll compressor.

### Background art

Compressors emit significant noise during the operation, which noise significantly impacts the surrounding of the place where a compressor is installed. Therefore many efforts have been made in recent years in order to reduce the overall noise generated by a compressor. The noise emitted to the surrounding may be reduced by means of technical devices located inside the compressor (e.g. mufflers) or by means of soundproof structures that are put on a compressor.

Exemplary soundproof structures for a compressor are disclosed in KR20130046660A and US2005274569A1. In general, such structures comprise multiple parts connected together in order to form an enclosure that surrounds a compressor in the place where it is installed.

CN205655414U discloses an idea that an air conditioning compressor may have two noise absorbing layers: a sound absorbing layer and a perforated sound insulation layer. The two layers are made of different materials, and thus have different acoustic properties.

CN209512260U discloses a sound insulation soft bag for a compressor of air conditioning unit. The sound insulation soft bag comprises stepped joints which are used in order to improve sound sealing effect.

The object of the present invention is to provide an acoustic hood for a compressor that has improved sound reducing properties comparing to the solutions known from the prior art.

### Summary of the invention

It is an object of the present invention to provide an improved compressor acoustic hood which can overcome the drawbacks encountered in conventional compressor acoustic hood.

Particularly, an object of the present invention is to provide an acoustic hood, for a compressor and for example for a scroll compressor, which has a simple, reliable and cheap structure, while ensuring an increased sound attenuation of the noise emitted by a compressor located inside the acoustic hood.

According to the invention such an acoustic hood, also named sound attenuating hood, comprises:
- a first semi-shell, a second semi-shell and a bottom part that forms an enclosure configured to surround the compressor,
- an inlet piping opening emerging in the enclosure and through which an inlet piping of the compressor is adapted to extend,
- an outlet piping opening emerging in the enclosure and through which an outlet piping of the compressor is adapted to extend,

wherein each of the first and second semi-shells is formed from a multi-layer foam material comprising a first inner layer having a first density and a first thickness and a second outer layer having a second density and a second thickness, the first density being lower than the second density, and the first thickness being higher than the second thickness, the first inner layer of each of the first and second semi-shells being a sound absorbing and insulating layer and the second outer layer of each of the first and second semi-shells being a sound absorbing and insulating layer,
wherein the first semi-shell is connected with the second semi-shell through at least one stepped lap joint, and for example at least one vertical stepped lap joint, formed by the first inner layers and the second outer layers of the first and second semi-shells.

Particularly, the first and second semi-shells are configured such that, when a compressor located inside the enclosure is running and a sound wave is generated by the compressor, said sound wave undergoes a first absorbing action while passing through the first inner layer of one of the first and second semi-shells and such that, when the sound wave reaches the respective second outer layer, a first part of said sound wave undergoes a second absorbing action while passing through said second outer layer and a second part of said sound wave is reflected back by said second outer layer and undergoes a third absorbing action within the respective first inner layer. As a result, a sound wave, emitted by the compressor, that reaches the surrounding is significantly reduced by three absorbing actions.

Such a configuration of the acoustic hood, and particularly the fact that each of the first and second semi-shells is formed from a multi-layer foam material comprising a first inner layer which is a sound absorbing and insulating layer and a second outer layer which is a sound absorbing and insulating layer and the fact that the first density is lower than the second density, enhances sound attenuation within each of the first and second semi-shells, notably due to the reflection of a part of the sound waves at the interface between the respective first inner layer and second outer layer and the transmission of a part of the sound waves through the respective second outer layer, and in a wider frequency range than other multi-layers foam materials from the prior art.

In addition, the labyrinth seal provided by the at least one stepped lap joint between the first and second semi-shell reduces the acoustic leaks and therefore improves the sound attenuation.

Consequently, the acoustic hood according to the present invention ensures an increased sound attenuation of the noise emitted by a compressor located inside the acoustic hood, while having a simple, reliable and cheap structure.

The acoustic hood may also include one or more of the following features, taken alone or in combination.

According to an embodiment of the invention, the acoustic hood is semi rigid. Such a configuration of the acoustic hood allows an easy handling of the acoustic hood and an easy mounting of the acoustic hood on the compressor.

According to an embodiment of the invention, the first and second densities, the first and second thicknesses and the overall structure of the acoustic hood are designed in such way that the acoustic hood is semi rigid.

According to an embodiment of the invention, the enclosure defines an inner volume configured to receive the compressor.

According to an embodiment of the invention, the mechanical properties of the first inner layer of the first semi-shell are substantially identical to the mechanical properties of the first inner layer of the second semi-shell, and the mechanical properties of the second outer layer of the first semi-shell are substantially identical to the mechanical properties of the second outer layer of the second semi-shell.

According to an embodiment of the invention, a thickness ratio between the first thickness and the second thickness is in range between 1 and 6.

According to an embodiment of the invention, a density ratio between the second density and the first density is in range between 1.5 and 3.6.

According to an embodiment of the invention, the first thickness is between 20 mm and 60 mm.

According to an embodiment of the invention, the second thickness is between 10 mm and 20 mm.

According to an embodiment of the invention, the first density is between 0,1 g/cm³ and 0,16 g/cm³.

According to an embodiment of the invention, the second density is between 0,24 g/cm³ and 0,36 g/cm³.

According to an embodiment of the invention, the multi-layer foam material may advantageously be a suitable polyurethane foam material, selected with desired properties relating to density and elasticity (as measured by a ball rebound test).

According to an embodiment of the invention, the multi-layer foam material is made from polyurethane foam granules, and for example polyurethane recycled foam granules. With the recycled foam granules, the acoustic hood minimizes waste generation and contributes to reduce resources and energy consumption.

In particular preferred embodiments, the polyurethane foam is a rebonded foam made from discarded mattress waste. This waste fraction provides a more homogenous density distribution as the mattress fraction mainly consists of polyether based High-Resilience (HR) foams in a typical density range of 25-45 kg/m³ before rebonding. Furthermore, the mattress fraction typically has a high elasticity with a ball rebound of >50%, whereas Post-Industrial rebonded foam often consists of a much wider density spread - both lower and higher than 25-45 kg/m³, as well as lower resilience foams some being polyester based. It is however possible and within the scope of the present invention to use these and other types of re-generated foams with the present invention. Furthermore, HR-foams are, despite the homogenous density and elasticity, well known for having a mixed cell structure which makes the quality of the cell labyrinth higher and more complex leading to a better sound absorption. The positive sound absorbing effect of the mixed cell structure is being further enhanced by shredding the foam waste into granulates where a typical granulate size is Ø 6 - 10 mm whereafter the granulates are pressed to a final density as described.

The choice of waste fraction with described cell structure and granulate size, in combination with the final density and thickness combinations, is specifically important to sound insulate in the frequency range of 400 Hz and upwards which results in a significant noise reduction on a compressor in the range of 9-11 dB.

According to an embodiment of the invention, the first semi-shell comprises a side wall and a top wall and the second semi-shell comprises at least one side wall.

According to an embodiment of the invention, the top wall of the first semi-shell is configured to cover an upper part of the second semi-shell.

According to an embodiment of the invention, the inlet piping opening and the outlet piping opening are provided on the second semi-shell, and for example on the at least one side wall of the second semi-shell.

According to an embodiment of the invention, the bottom part is connected with the side wall of the first semi-shell and the at least one side wall of the second semi-shell through a stepped lap joint formed by the bottom part and the first inner layers and the second outer layers of the first and second semi-shells.

According to an embodiment of the invention, the first semi-shell and the second semi-shell have respectively a dove tail projection and a dove tail seat in order to obtain a dove tail shaped connection between the top wall of the first semi-shell and the at least one side wall of the second semi-shell.

According to an embodiment of the invention, the top wall includes the dove tail projection. For example, the dove tail projection may be arranged on a lower face of the top wall. Advantageously, dove tail projection projects from the top wall towards the bottom part.

According to an embodiment of the invention, the dove tail seat emerges in an upper face of the second semi-shell.

According to an embodiment of the invention, the acoustic hood has a roof part located on the top wall of the first semi-shell and provided with a sloped surface configured to be angled at an angle in respect to a horizontal plane when the acoustic hood rests on a horizontal surface.

According to an embodiment of the invention, the angle is in the range from 1 to 10°.

According to an embodiment of the invention, the roof part is formed integrally with the top wall of the first semi-shell.

According to an embodiment of the invention, the acoustic hood comprises a control wiring opening emerging in the enclosure and through which a control wiring of the compressor is adapted to extend. The control wiring may include a power cable for the compressor.

According to an embodiment of the invention, the side wall of the first semi-shell is connected with at least one side wall of the second semi-shell via a basically vertical joint.

According to an embodiment of the invention, the acoustic hood comprises at least one additional opening, for example formed in a side wall of one of the first and second semi-shells, for an optional equipment of the compressor, such as an oil sight glass.

According to an embodiment of the invention, the first and second semi-shells are tightened together by at least one fastening belt surrounding the first and second semi-shells.

According to an embodiment of the invention, the at least one fastening belt extends around the side wall of the first semi-shell and the at least one side wall of the second semi-shell.

According to an embodiment of the invention, the acoustic hood is configured such that, at the at least one stepped lap joint between the first and second semi-shells, the first inner layer of one of the first and second semi-shells is overlapped with the second outer layers of the other one of the first and second semi-shells.

According to an embodiment of the invention, the acoustic hood further includes a cover installed over the first and second semi-shells, said cover being made from a water tight and UV proof textile assembled by use of ultrasonic welding, which gives watertight connections. Polyurethane foam is well-known to be degraded overtime when exposed to direct UV, especially the polyether-based types. Furthermore, the open cell structure of polyurethane foam allows unwanted water absorption, which decreases the sound insulating properties. Finally, there is a risk for unwanted acoustic leakage in the joints between the first and second semi-shells. For these reasons (and for visual appearance reasons), a cover, made in a watertight and UV proof textile, may be installed over the first and second semi-shells. The cover is advantagesouly produced by use of ultrasonic welding, which gives water tight connections even when parts of the textile are connected with each other (in contrary to traditional sewing, where the perforation of a needle compromises the water tight properties). Advantagously, the cover is furthermore designed to fit tightly over the first and second semi-shells ensuring that no joints are open for acoustic leakage.

The present invention also relates to a method of preparing a foam material suitable for forming first inner layers and second outer layers of first and second semi-shells of an acoustic hood according to the present invention, wherein the foam material, which may be a polyurethane foam, is is a rebonded foam from regenerated matress waste having a density in the range of 15-65 kg per m³ before rebonding, wherein the regenerated mattress waste is shreeded into granulates, thereby creating a granulate mix having an average granulate diameter size between 4 and 15 mm, after which the shredded granulates are rebonded and compressed to a desired pre-defined density.

According to an embodiment of the invention, the granulates are shredded to achieve an average granulate diameter size between 6 and 10 mm and the density range of the not bonded granulates is in the range of 25-45 kg/m³, and the elasticity of the mattress waste material prior to being shredded is above 50% in a ball rebound test. This mixture has shown to be particular advantageous to sound insulate in the frequency range of 400 Hz and upwards which results in a significant noise reduction on a compressor in the range of 9-11 dB when the foam material is used in an acoustic hood as discussed above.

According to an embodiment of the invention, a prepolymerized MDI is added to the granulate mix in a process chamber, whereafter the granulate mix with the prepolymerized MDI is transferred to a mold, whereafter the granulate mix and the prepolymerized MDI are pressed in the mold to obtain the desired density, while steam is inytroduced into the mold in order to sterilize the granulate mix and accelerate the curing process of the prepolymerized MDI which acts as an adhesive, has proven advantageous.

One special concern arising when using regenerated foam materials is a risk of unwanted bacteria in the final product, leading to a HSE risk when handling. To mitigate this and obtain a sterile and bacteria free foam grade, a prepolymerized MDI is added to the granulate mix in a mix chamber, whereafter the granulates are poured into a mould. A lid is pressing the height to control the final density of the foam and steam is hereafter added, partly to accelerate the curing of the prepolymer, which acts a glue bonding the granulates together (a well-known processing technology), but especially to sterilize the foam and eliminate any bacteria coming from the potentially contaminated discarded mattresses.

### Brief description of the drawings

The following detailed description of several embodiments of the invention is better understood when read in conjunction with the appended drawings being understood, however, that the invention is not limited to the specific embodiments disclosed.
Figure 1 is a perspective view of an acoustic hood according to a first embodiment of the present invention,
Figure 2 is a perspective exploded view of the acoustic hood of figure 1,
Figure 3a and Figure 3b are cross section views of the multi-layer foam materials of the first and second semi-shells of the acoustic hood of figure 1,
Figure 4 and Figure 5 are cross section views of stepped lap joints between first and second semi-shells of the acoustic hood of figure 1,
Figure 6 is a partially sectional view of a stepped lap joint between first and second semi-shells and a bottom part of the acoustic hood of figure 1,
Figure 7 is a perspective view of a cover configured to be installed over the first and second semi-shells of the acoustic hood of figure 1,
Figure 8 is a side view of an acoustic hood according to a second embodiment of the present invention, and
Figure 9 is a perspective view of an acoustic hood according to a third embodiment of the present invention.

### Detailed description of the preferred embodiments

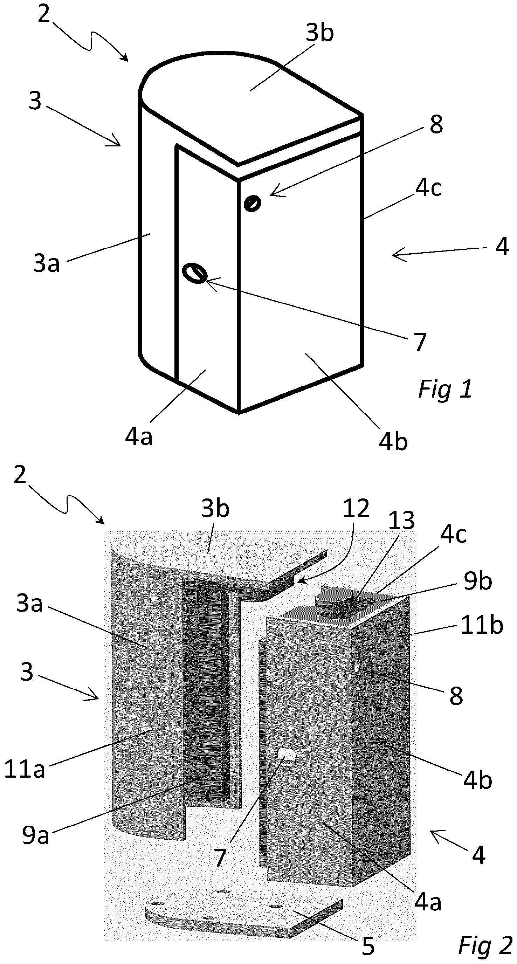

Figures 1 to 6 show an acoustic hood 2 according to a first embodiment of the present invention.

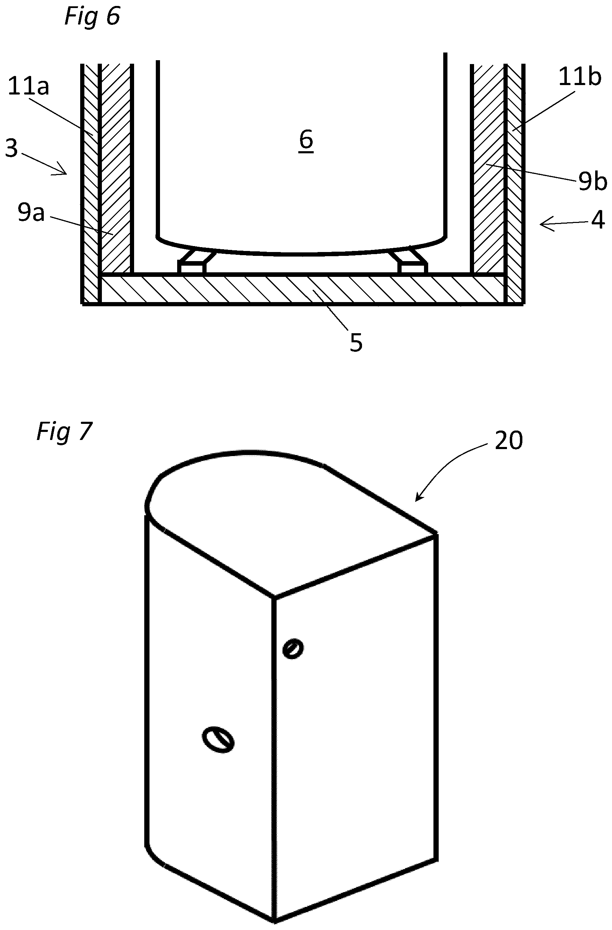

The acoustic hood 2 comprises a first semi-shell 3, a second semi-shell 4 and a bottom part 5 that forms an enclosure configured to surround a compressor 6 (see figure 6) and for example a scroll compressor such as a refrigeration scroll compressor. Particularly, the enclosure defines an inner volume configured to entirely receive the compressor 6. Advantageously, the overall shape and dimensions of the acoustic hood 2 are adapted to the shape and dimensions of the compressor 6 located inside the acoustic hood 2.

According to the first embodiment of the invention, the first semi-shell 3 comprises a side wall 3a and a top wall 3b, and the second semi-shell 4 comprises three rectangular side walls 4a, 4b, 4c configured to be covered by the top wall 3b, and the acoustic hood 2 has a generally cuboid shape with one rounded side wall formed by the side wall 3a. It is envisaged in other embodiments of the invention that the top wall 3b may be formed integrally with the second semi-shell 4 instead of the first semi-shell 3.

The second semi-shell 4 comprises an inlet piping opening 7 configured to emerge in the enclosure and through which an inlet piping of the compressor 6 is adapted to extend, and also an outlet piping opening 8 configured to emerge in the enclosure and through which an outlet piping of the compressor 6 is adapted to extend. According to the first embodiment of the invention, the inlet piping opening 7 is formed on the side wall 4a, and the outlet piping opening 8 is formed on the side wall 4b. Advantageously, the dimensions and the shapes of the inlet piping opening 7 and the outlet piping opening 8 are designed in such way that the respective inlet and outlet piping are received in them in a tight manner.

It is envisaged in other embodiments of the invention that the inlet piping opening 7 and the outlet piping opening 8 may be located on different side walls or on the same side wall or the number of the openings may be different than two. As an example, the acoustic hood 2 may comprise a control wiring opening (not shown on the drawings) configured to emerge in the enclosure and through which a control wiring, such as electric wires, of the compressor 6 is adapted to extend. Said control wiring opening may for example be formed in the side wall 4b. The acoustic hood 2 may also comprise an additional opening, for example formed in a side wall of one of the first and second semi-shells 3, 4, for an optional equipment of the compressor 6, such as an oil sight glass. An additional opening for a power cable for the compressor 6 may be located in the bottom part 5 (it is preferred when the compressor 6 is mounted on rails) or in one of the semi -shells 3, 4 (it is preferred when the compressor is mounted to a horizontal plane).

In order to avoid acoustic leakage, the inlet piping opening 7 and the outlet piping opening 8 (and eventually the additional opening) should be carried out with precision, and particularly should have correct dimension and angle (indeed, for example too big hole will compromise the acoustic performance). The typical processing method to obtain said openings is a 2D cutting technology, e.g. waterjet cutting or string cutting, which do not allow an angled hole (except if a multi axled waterjet cutter is used, but that is both rare and expensive method to use).

As shown on figure 2, each of the first and second semi-shells 3, 4 is formed by a multi-layer foam material respectively comprising a first inner layer 9a, 9b having a first density and a first thickness d1 and a second outer layer 11a, 11b having a second density and a second thickness d2. The first inner layer 9a, 9b of each of the first and second semi-shells 3, 4 is a sound absorbing and insulating layer, and the second outer layer 11a, 11b of each of the first and second semi-shells 3, 4 is a sound absorbing and insulating layer. The multi-layer foam material of each of the first and second semi-shells 3, 4 may be made from polyurethane recycled foam granules.

Particularly, the side wall 3a and the top wall 3b of the first semi-shell 3 are formed by the first inner layer 9a and the second outer layer 11a, while the side walls 4a, 4b, 4c of the second semi-shell 4 are formed by the first inner layer 9b and the second outer layer 11b.

As shown on figure 2, the top wall 3b has a dove tail projection 12 formed by the first inner layer 9a and the second outer layer 11a and projecting from the top wall 3b towards the bottom part 5. The second semi-shell 4 includes a dove tail seat 13 defined by the side walls 4a, 4b, 4c and configured to cooperate with the dove tail projection 12 in order to obtain a dove tail shaped connection between the first semi-shell 3 and the second semi-shell 4, and thus a good adjustment and better stability of the acoustic hood 2. Advantageously, the dove tail seat 13 emerges in an upper face of the second semi-shell 4.

Advantageously, the first density is lower than the second density and, and the first thickness d1 is higher than the second thickness d2. According to an embodiment of the invention, the first density is between 0,1 g/cm³ and 0,16 g/cm³, for example 0,13 g/cm³, and the second density is between 0,24 g/cm³ and 0,36 g/cm³, for example 0,3 g/cm³. The first thickness d1 may be between 20 mm and 60 mm, for example 40 mm, and the second thickness d2 may be between 10 mm and 20 mm, for example 15 mm. Advantageously, a density ratio of the second density to the first density is in range between 1.5 and 3.6, and for example is 2,3, and a thickness ratio of the first thickness d1 to the second thickness d2 is in range between 1 and 6, and for example is 2,7.

Advantageously, the mechanical properties of the first inner layer 9a of the first semi-shell 3 are substantially identical to the mechanical properties of the first inner layer 9b of the second semi-shell 4, and the mechanical properties of the second outer layer 11a of the first semi-shell 3 are substantially identical to the mechanical properties of the second outer layer 11b of the second semi-shell 4. However, in some embodiments, at least one inner/outer layer may have different properties than the other inner/outer layer, for example in order to obtain different sound attenuation in different directions or in order to obtain an acoustic hood 2 with a variable rigidity.

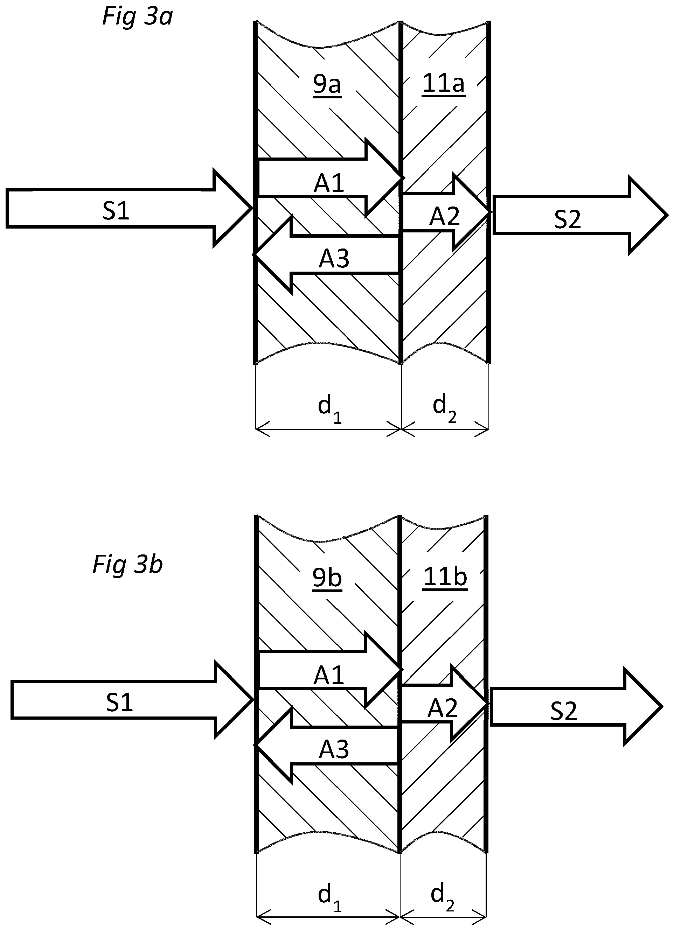

Figures 3a and 3b shows the structure of the multi-layer foam materials of the first and second semi-shells 3, 4 and the way how the multi-layer foam material of each of the first and second semi-shells 3, 4 attenuates the noise generated by the compressor 6 located inside the acoustic hood 2.

Now it will be described how the multi-layer foam material of each of the first and second semi-shells 3, 4 attenuates the noise generated by the compressor 6.

When the scroll compressor 6 located within the enclosure is running and a sound wave S1 is generated by the compressor 6, said sound wave S1 undergoes a first absorbing action A1 while passing through the first inner layer 9a, 9b of one of the first and second semi-shells 3, 4, since said first inner layer 9a, 9b is a sound absorbing and insulating layer. Each second outer layer 11a, 11b is a sound absorbing and insulating layer, thus it both absorbs and reflects the sound wave S1. Thus, once the sound wave S1 reaches the respective second outer layer 11a, 11b, a first part of said sound wave S1 undergoes a second absorbing action A2 while passing through said second outer layer 11a, 11b and a second part of said sound wave S1 is reflected back by said second outer layer 11a, 11b and undergoes a third absorbing action A3 within the respective first inner layer 9a, 9b. As a result, a sound wave S2 that reaches the surrounding is significantly reduced by three absorbing actions A1, A2 and A3.

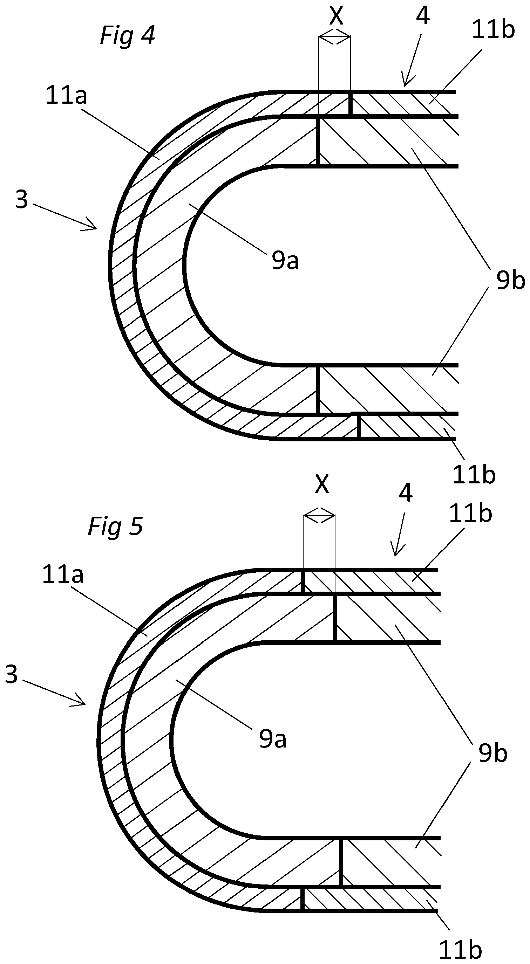

Advantageously, the first semi-shell 3 is connected with the second semi-shell through vertical stepped lap joints formed by the first inner layers 9a, 9b and the second outer layers 11a, 11b of the first and second semi-shells 3, 4. Figures 4 and 5 show cross section views of exemplary embodiments of vertical stepped lap joints between the first and second semi-shells 3, 4, wherein on figure 4 the second outer layer 11a of the first semi-shell 3 overlaps with the first inner layers 9b of the second semi-shell 4 and on figure 5 the first inner layer 9a of the first semi-shell 3 overlaps with the second outer layers 11b of the second semi-shell 4. In both cases, the offset X of the overlapping may be in range from 1 to 20 mm.

By providing stepped lap joints with an overlapping, acoustic leaks at the joints between the first inner layer 9a and the second outer layer 11a of the first semi-shell 3 and the first inner layer 9b and the second outer layer 11b of the second semi-shell 4 may be reduced, as a "labyrinth" seal is provided, i.e. a sound wave cannot pass through the multi-layer foam material, at said joints, without a change in the direction of movement. In other words, the pathway of a sound wave through the multi-layer foam material, at a joint between the first and second semi-shells 3, 4 is not a straight line.

Advantageously, the bottom part 5 is connected with the side wall 3a of the first semi-shell 3 and the side walls 4a, 4b, 4c of the second semi-shell 4 through a horizontal stepped lap joint formed by the bottom part 5 and the first inner layers 9a, 9b and the second outer layers 11a, 11b of the first and second semi-shells 3, 4. According to the first embodiment of the invention (see figure 6), the second outer layers 11a, 11b of the first and second semi-shells 3, 4 overlap with the bottom part 5 at said horizontal stepped lap joint.

Polyurethane foam is well-known to be degraded overtime when exposed to direct UV, especially the polyether-based types. Furthermore, the open cell structure of polyurethane foam allows unwanted water absorption, which decreases the sound insulating properties. Finally, there is a risk for unwanted acoustic leakage in the joints between the first and second semi-shells 3, 4. For these reasons (and for visual appearance reasons), the acoustic hood 2 may further includes a cover 20 (shown on figure 7) configured to be installed over the first and second semi-shells 3, 4 and being made from a water tight and UV proof textile.

The cover 20 is advantagesouly produced by use of ultrasonic welding, which gives water tight connections even when parts of the textile are connected with each other (in contrary to traditional sewing, where the perforation of a needle compromises the water tight properties). Advantagously, the cover 20 is furthermore designed to fit tightly over the first and second semi-shells 3, 4 ensuring that no joints are open for acoustic leakage.

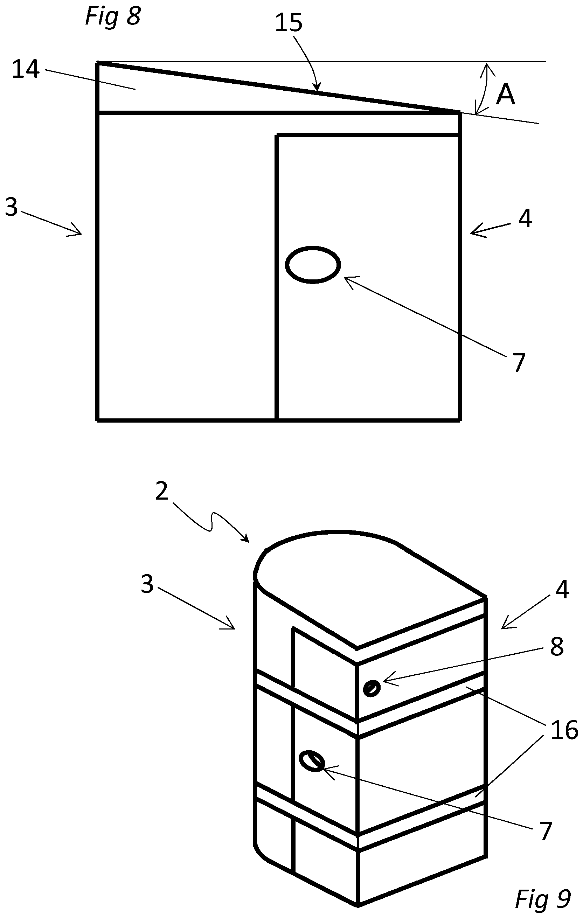

Figure 8 shows a side view of the acoustic hood 2 according to a second embodiment of the present invention. In this second embodiment, the acoustic hood 2 has a roof part 14 located on the top wall 3b of the first semi-shell 3. The roof part 14 has a sloped surface 15 which is configured to be angled at an angle A in respect to a horizontal plane when the acoustic hood 2 rests on a horizontal surface. The angle A may be in range from 1 to 10°. Thanks to the roof part 14, an accumulation of the water at the top wall 3b of the compressor 6 is avoided. It is also envisaged by the present invention that the roof part 14 may have other shapes allowing the water to free fall under the gravity from the acoustic hood 2, or may be formed integrally with the top wall 3b of the first semi-shell 3.

Figure 9 shows a perspective view of an acoustic hood 2 according to a third embodiment of the present invention. In said third embodiment, the acoustic hood 2 is provided with two fastening belts 16 that surround the first and second semi-shells 3, 4 and tighten the first and second semi-shells 3, 4 together in order to provide a better stabilization for the acoustic hood 2. Advantageously, the fastening belts 16 extend around the side walls 3a, 4a, 4b, 4c of the first and second semi-shells 3, 4. According to other embodiments of the invention, the acoustic hood 2 may include only one fastening belt 16 or more than two fastening belts 16.

According to another embodiment of the invention, the acoustic hood 2 may be configured to receive a piston compressor or an oil-free compressor, and may be applied for compressors from other applications than refrigeration, e.g. heat pump applications.

Of course, the invention is not restricted to the embodiments described above by way of non-limiting examples, but on the contrary it encompasses all embodiments thereof.

## Claims

1. An acoustic hood (2) for a compressor (6), comprising:
- a first semi-shell (3), a second semi-shell (4) and a bottom part (5) that forms an enclosure configured to surround the compressor (6),
- an inlet piping opening (7) emerging in the enclosure and through which an inlet piping of the compressor (6) is adapted to extend,
- an outlet piping opening (8) emerging in the enclosure and through which an outlet piping of the compressor (6) is adapted to extend,
wherein each of the first and second semi-shells (3, 4) is formed from a multi-layer foam material comprising a first inner layer (9a, 9b) having a first density and a first thickness (d1) and a second outer layer (11a, 11b) having a second density and a second thickness (d2), the first density being lower than the second density, and the first thickness (d1) being higher than the second thickness (d2), the first inner layer (9a, 9b) of each of the first and second semi-shells (3, 4) being a sound absorbing and insulating layer and the second outer layer (11a, 11b) of each of the first and second semi-shells (3, 4) being a sound absorbing and insulating layer,
wherein the first semi-shell (3) is connected with the second semi-shell (4) through at least one stepped lap joint formed by the first inner layers (9a, 9b) and the second outer layers (11a, 11b) of the first and second semi-shells (3, 4).

2. The acoustic hood (2) according to claim 1, wherein a thickness ratio between the first thickness (d1) and the second thickness (d2) is in range between 1 and 6.

3. The acoustic hood (2) according to claim 1 or 2, wherein a density ratio between the second density and the first density is in range between 1.5 and 3.6.

4. The acoustic hood (2) according to any one of claims 1 to 3, wherein the first thickness (d1) is between 20 mm and 60 mm.

5. The acoustic hood (2) according to any one of claims 1 to 4, wherein the second thickness (d2) is between 10 mm and 20 mm.

6. The acoustic hood (2) according to any one of claims 1 to 5, wherein the first density is between 0,1 g/cm3 and 0,16 g/cm3.

7. The acoustic hood (2) according to any one of claims 1 to 6, wherein the second density is between 0,24 g/cm³ and 0,36 g/cm³.

8. The acoustic hood (2) according to any one of claims 1 to 7, wherein the multi-layer foam material is made from polyurethane foam granules.

9. The acoustic hood (2) according to any one of claims 1 to 8, wherein the first semi-shell (3) comprises a side wall (3a) and a top wall (3b) and the second semi-shell (4) comprises at least one side wall (4a, 4b, 4c).

10. The acoustic hood (2) according to claim 9, wherein the bottom part (5) is connected with the side wall (3a) of the first semi-shell (3) and the at least one side wall (4a, 4b, 4c) of the second semi-shell (4) through a stepped lap joint formed by the bottom part (5) and the first inner layers (9a, 9b) and the second outer layers (11a, 11b) of the first and second semi-shells (3, 4).

11. The acoustic hood (2) according to claim 9 or 10, wherein the first semi-shell (3) and the second semi-shell (4) have respectively a dove tail projection (12) and a dove tail seat (13) in order to obtain a dove tail shaped connection between the top wall (3b) of the first semi-shell (3) and the at least one side wall (4a, 4b, 4c) of the second semi-shell (4).

12. The acoustic hood (2) according to any one of claims 9 to 11, wherein the acoustic hood (2) has a roof part (14) located on the top wall (3b) of the first semi-shell (3) and provided with a sloped surface (15) configured to be angled at an angle (A) in respect to a horizontal plane when the acoustic hood (2) rests on a horizontal surface.

13. The acoustic hood (2) according to claim 12, wherein the angle (A) is in the range from 1 to 10°.

14. The acoustic hood (2) according to claim 12 or 13, wherein the roof part (14) is formed integrally with the top wall (3b) of the first semi-shell (3).

15. The acoustic hood (2) according to any one of claims 1 to 14, wherein the first and second semi-shells (3, 4) are tightened together by at least one fastening belt (16) surrounding the first and second semi-shells (3, 4).

16. The acoustic hood (2) according to any one of claims 1 to 15, wherein the acoustic hood (2) further includes a cover (20) installed over the first and second semi-shells (3, 4), said cover (20) being made from a water tight and UV proof textile assembled by use of ultrasonic welding.

17. Method of preparing a foam material suitable for forming first inner layers (9a, 9b) and second outer layers (11a, 11b) of first and second semi-shells (3, 4) of an acoustic hood according to any one of claims 1 to 16, wherein the foam material is a rebonded foam from regenerated matress waste having a density in the range of 15-65 kg per m³ before rebonding, wherein the regenerated mattress waste is shreeded into granulates, thereby creating a granulate mix having an average granulate diameter size between 4 and 15 mm, after which the shredded granulates are rebonded and compressed to a desired pre-defined density.

18. Method according to claim 17, wherein the granulates are shredded to achieve an average granulate diameter size between 6 and 10 mm and the density range of the not bonded granulates is in the range of 25-45 kg/m³, and wherein the elasticity of the mattress waste material prior to being shredded is above 50% in a ball rebound test.

19. Method according to claim 18, wherein a prepolymerized MDI is added to the granulate mix in a process chamber, whereafter the granulate mix with the prepolymerized MDI is transferred to a mold, whereafter the granulate mix and the prepolymerized MDI are pressed in the mold to obtain the desired density, while steam is introduced into the mold in order to sterilize the granulate mix and accelerate the curing process of the prepolymerized MDI which acts as an adhesive.
